# EUROPEAN PATENT APPLICATION

(11) **EP 4 814 828 A1**
(43) Date of publication of application: **30.09.2026**
(21) Application number: 26166713.3
(22) Date of filing: 23.03.2026
(51) Int. Cl.: G06Q 10/0633

(54) **METHOD FOR GENERATING OBJECT-CENTRIC DIRECTLY FOLLOWS GRAPH LAYOUT USING MULTI BACKBONE**

(30) Priority: 26.03.2025 KR 20250038972; 10.09.2025 KR 20250129409
(71) Applicant: POSTECH Research and Business Development Foundation, Pohang-si, Gyeongsangbuk-do 37673 (KR)
(72) Inventor: SONG, Min Seok, 37673 Pohang-si, Gyeongsangbuk-do (KR); LEE, Deok Sang, 37673 Pohang-si, Gyeongsangbuk-do (KR)
(74) Representative: Jung, Minkyu

(57) **Abstract**

In one embodiment, the process mining method comprises: determining, by a process mining apparatus, nodes and edges for each object type based on log data; determining, by the process mining apparatus, backbones for the respective object types; assigning, by the process mining apparatus, ranks to nodes; generating, by the process mining apparatus, process layouts for the respective object types; and integrating, by the process mining apparatus, the process layouts for the respective object types to generate an overall process layout.

## Description

### CROSS-REFERENCE TO RELATED APPLICATION

This application claims the benefit of priority under 35 U.S.C. § 119(a) to Korean Patent Application No. 10-2025-0038972, filed Mar. 26, 2025, and Korean Patent Application No. 10-2025-0129409, filed Sep. 10, 2025, before the Korean Intellectual Property Office, the disclosures of which are incorporated herein by reference in their entireties.

### BACKGROUND

### 1. Field

The technology described below relates to Process Mining.

### 2. Discussion of Related Art

Process Mining is technologie for analyzing log data to identify in what order events proceed, and visualizing and showing the same. Process Mining is one of technologies for automatically analyzing and visualizing a workflow based on an event history stored in a system, without requiring a person to define procedures one by one. Through Process Mining, a flow, bottlenecks, repetitions, exceptions, and the like of a process may be easily identified. Through Process Mining, an enterprise may optimize a workflow.

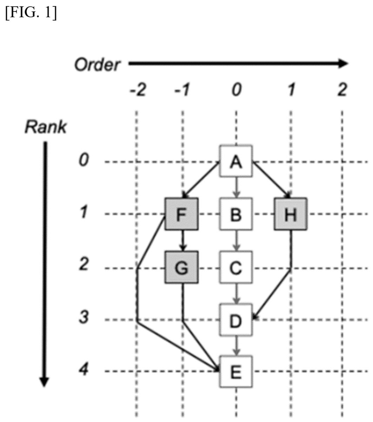

A result of Process Mining may generally be expressed in the form of a graph. In order to improve readability of the graph, a hierarchical layout may be used. In the hierarchical layout, concepts of rank and order may be utilized. FIG. 1 shows one example of an embodiment of rank and order. Rank may mean a vertical position of a node. Rank may generally reflect a precedence relationship or a time sequence. Order may mean a horizontal position within the same rank. Rank and order play an important role in improving visual clarity and interpretability of a process layout.

### SUMMARY

In an existing Process Mining method, since various object types are integrated into one category and analyzed, a problem occurs in that interactions among objects become ambiguous. In order to overcome such a limitation, an object-centric process mining (OCPM: Object-Centric Process Mining) method using an object-centric event log (OCEL: Object-Centric Event Log) in which event logs are stored in an object-centric manner is being developed. Further, methods for deriving process models such as an OC-DFG (Object-Centric Directly-Follows Graph) and an OCPN (Object-Centric Petri Net) based on the OCEL are being developed.

Since object-centric process mining considers various objects together, more nodes and edges may be generated than in a conventional method. Accordingly, a process layout generated through object-centric process mining tends to have a complicated structure. Therefore, there is a need for an effective layout generation scheme for visualizing the same so that such complexity may be alleviated and interactions among object types may be more easily understood.

The technology described below is directed to disclosing a method for generating a process layout by setting a backbone for each object type, and then generating an overall process layout by merging layouts for the respective object types.

The technology described below is directed to disclosing a method for generating a process layout in which object types having many interactions are arranged closely and object types having few interactions are arranged distantly.

### [Technical Solution]

The technology described below is directed to disclosing a process mining method.

In one embodiment, the process mining method comprises: determining, by a process mining apparatus, nodes and edges for each object type based on log data; determining, by the process mining apparatus, a backbone for each object type; assigning, by the process mining apparatus, ranks to nodes; generating, by the process mining apparatus, process layouts for the respective object types; and integrating, by the process mining apparatus, the process layouts for the respective object types to generate an overall process layout.

In one embodiment, the process mining method further comprises preparing, by the process mining apparatus, the log data. Preparing the log data comprises at least one of: (i) extracting nodes and edges from the log data and; (ii) extracting traces and variants from the log data.

In one embodiment, determining the backbone comprises determining, as the backbone, nodes and edges included in a variant having the highest frequency in each object type.

In one embodiment, assigning the ranks to the nodes comprises assigning ranks to nodes for each object type such that a value of a first objective function is minimized. The first objective function may be a function for minimizing violations of precedence relationships and lengths of edges.

In one embodiment, assigning the ranks to the nodes comprises assigning ranks to the nodes such that at least one first constraint condition is satisfied. The at least one first constraint condition comprises at least one selected from the group consisting of: (i) a constraint condition in which an end node of the overall process layout is arranged below a start node; (ii) a constraint condition in which start nodes of object types are arranged above other nodes included in a same object type; and (iii) a constraint condition in which end nodes of object types are arranged below other nodes included in the same object type.

In one embodiment, generating the process layouts for the respective object types comprises generating the process layouts for the respective object types by applying a backbone-based process layout generation method to each object type.

In one embodiment, generating the overall process layout comprises a process of selecting a main object type, a process of selecting, as a target object type, an object type most similar to the main object type, a process of deriving merge candidate groups according to merging of the selected target object type, a process of generating candidate merged process layouts corresponding to the derived merge candidate groups, and a process of generating the overall process layout by selecting an optimal merged layout from among the candidate merged process layouts.

In one embodiment, the main object type is an object type having the largest number of shared nodes with another object type.

In one embodiment, the target object type is an object type having a shortest distance from the main object type, and the distance may become shorter as a number of nodes shared by two process layouts increases. The distance is determined based on a number of nodes shared by the two process layouts such that the distance decreases as the number of shared nodes increases.

In one embodiment, the process mining apparatus further comprises assigning different colors to nodes included in the generated overall process layout according to object types.

In one embodiment, generating the overall process layout by selecting the optimal merged layout may comprise a process of calculating costs of generated candidate merged process layouts and selecting a candidate merged process layout showing the lowest cost.

In one embodiment, the cost may be calculated based on a second objective function including a first term and a second term.

In one embodiment, the first term may be a term reflecting how much a rank of a distance between two object types in the generated candidate merged process layout differs from a rank of a distance between the two object types in an actual event log.

In one embodiment, the second term may be a term reflecting how many edge overlaps are present in the generated candidate merged process.

In one embodiment, a process mining apparatus, comprising: a computing device; and a storage device storing instructions that, when executed by the computing device, cause the process mining apparatus to perform operations comprising: determining nodes and edges for each object type based on log data; determining backbones for the respective object types; assigning ranks to the nodes; generating process layouts for the respective object types; and integrating the process layouts for the respective object types to generate an overall process layout.

In one embodiment, the operations may further comprise preparing the log data. In one embodiment, determining the backbones may comprise determining, as a backbone, nodes and edges included in a highest-frequency variant for each object type.

In one embodiment, assigning the ranks to the nodes may comprise assigning ranks to nodes such that a value of a first objective function is minimized.

In one embodiment, assigning the ranks to the nodes may comprise assigning the ranks such that at least one first constraint condition is satisfied.

In one embodiment, generating the process layouts for the respective object types may comprise generating a process layout for each object type by applying a backbone-based process layout generation method to each object type.

In one embodiment, generating the overall process layout may comprise selecting a main object type, selecting, as a target object type, an object type most similar to the main object type, deriving merge candidate groups, generating candidate merged process layouts, and selecting an optimal merged layout.

In one embodiment, the above operations may be repeatedly performed until there is no remaining object type to be merged.

In one embodiment, the main object type may be an object type having a largest number of shared nodes with another object type.

In one embodiment, the target object type may be an object type having a shortest distance from the main object type, the distance being determined based on a number of shared nodes such that the distance decreases as the number of shared nodes increases.

In one embodiment, generating the overall process layout may further comprise calculating costs of candidate merged process layouts and selecting a candidate merged process layout having a lowest cost.

In one embodiment, the cost may be calculated based on a second objective function including a first term and a second term, the first term reflecting a difference between a rank of a distance between two object types in a generated candidate merged process layout and a rank of a distance between the two object types in an actual event log, and the second term reflecting a number of edge overlaps.

In one embodiment, the operations may further comprise assigning different colors to nodes included in the generated overall process layout according to object types.

Using the technology described below, an intuitive object-centric process layout may be generated. Through the same, compared to an existing conventional Process Mining technique, a process layout in which interactions among objects are expressed more intuitively may be output.

Using the technology described below, object types having active interactions may be arranged closely, and object types having few interactions may be arranged distantly. Through the same, interactions among arrangements may be visualized more clearly.

Using the technology described below, process layouts of a plurality of object types may be optimized in a layout merging step so that space may be efficiently used. Through the same, edge overlap may be minimized so that the structure of the process layout may be visualized more neatly.

Using the technology described below, a process layout in which start nodes and end nodes of each object type are clearly distinguished may be generated. Further, using the technology described below, a process layout in which flows are indicated by colors and are easily distinguishable may be generated. Through the same, a business process may be improved or aid may be provided in decision-making.

### BRIEF DESCRIPTION OF THE DRAWINGS

FIG. 1 shows one example of an embodiment of rank and order.
FIG. 2 shows an example arranged in consideration of precedence relationships of start nodes and end nodes for each object type.
As shown in FIG. 3, an example in which flows of the respective object types are distinguished by different colors is shown.
As shown in FIG. 4, an example in which flows of the respective object types are distinguished by different colors is shown. Further, FIG. 4 shows an example in which object types having many interactions are arranged closely and object types having few interactions are arranged distantly.

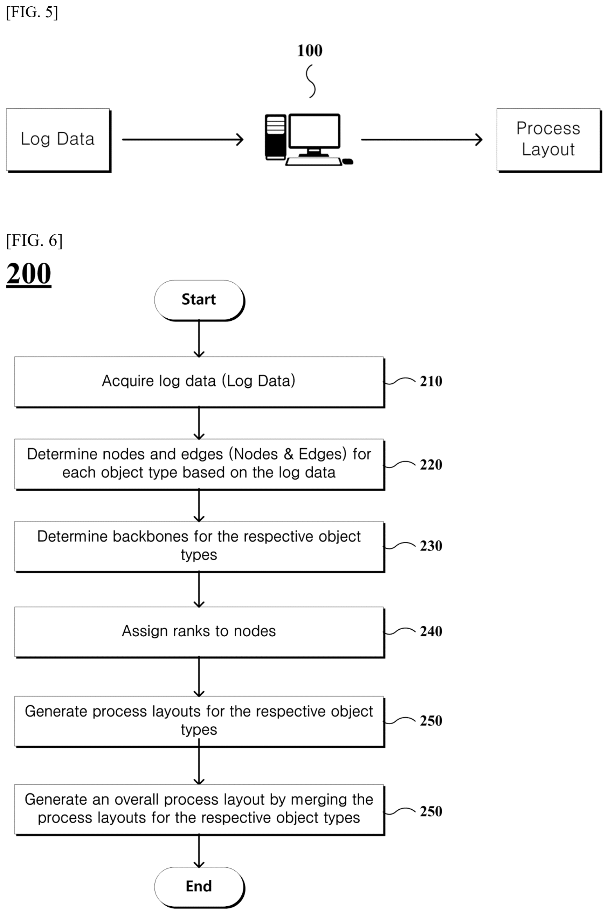

FIG. 5 shows one example of an embodiment in which a process mining apparatus (100) performs a process mining method.
FIG. 6 shows one example (200) of an embodiment of a process mining method.

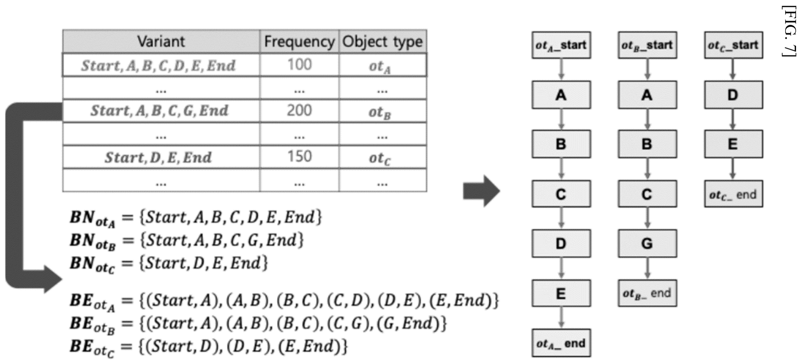

FIG. 7 shows one example of determining a backbone for each object type.

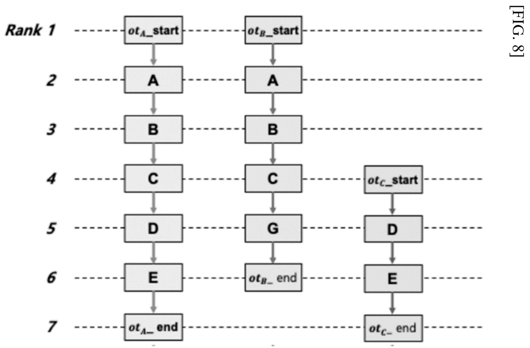

FIG. 8 shows one example in which ranks are assigned to nodes.

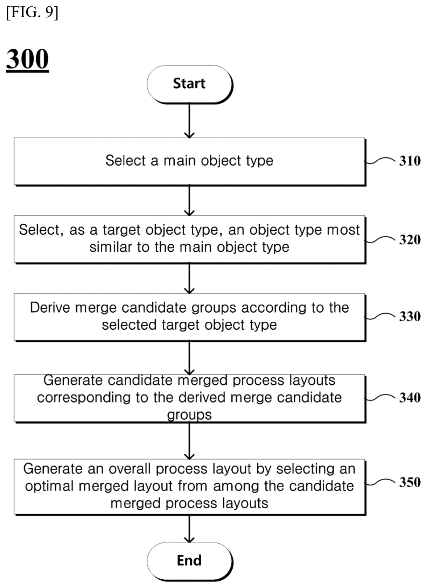

FIG. 9 shows one example (300) of generating an overall process layout by merging process layouts for the respective object types.

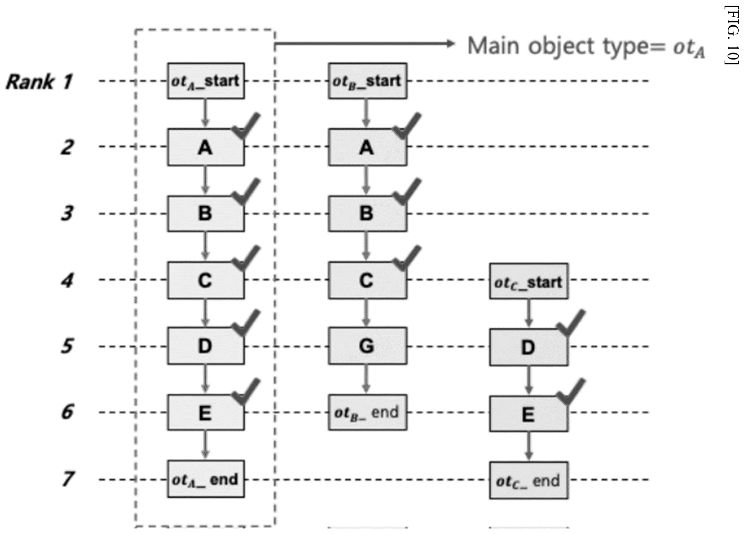

FIG. 10 shows one example of determining a main object type.

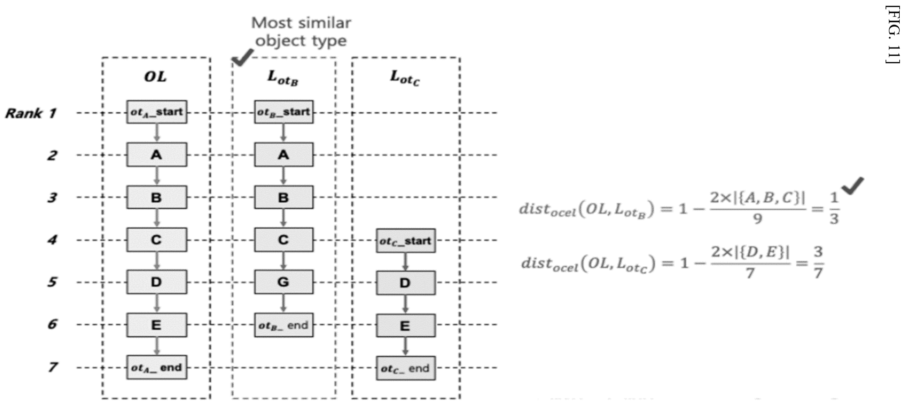

FIG. 11 shows one example of selecting an object type most similar to another.

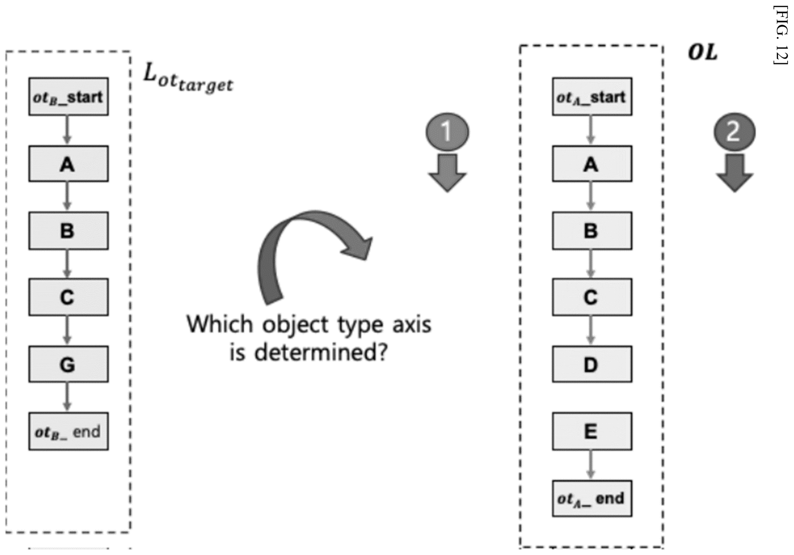

FIG. 12 shows an example of candidate groups of object type axes.

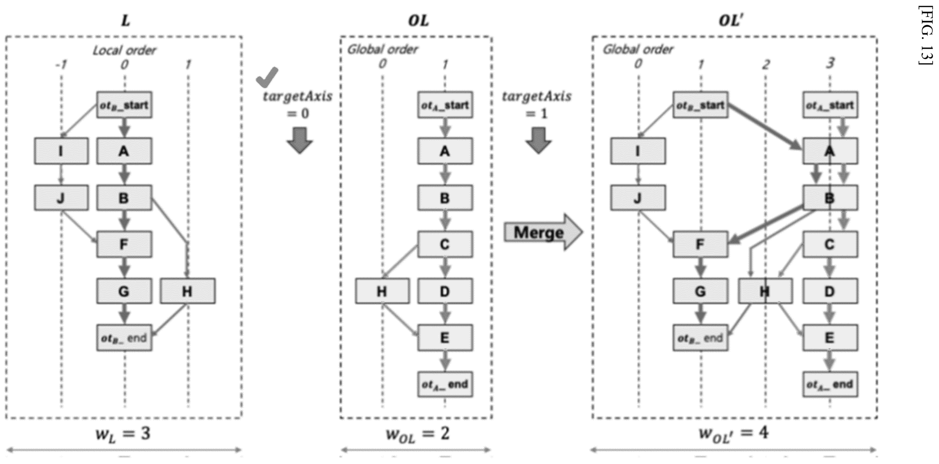

FIG. 13 shows one example in which a layout L of object type B is disposed on target object type axis 0 (left side of object type A) in OL initialized with object type A.

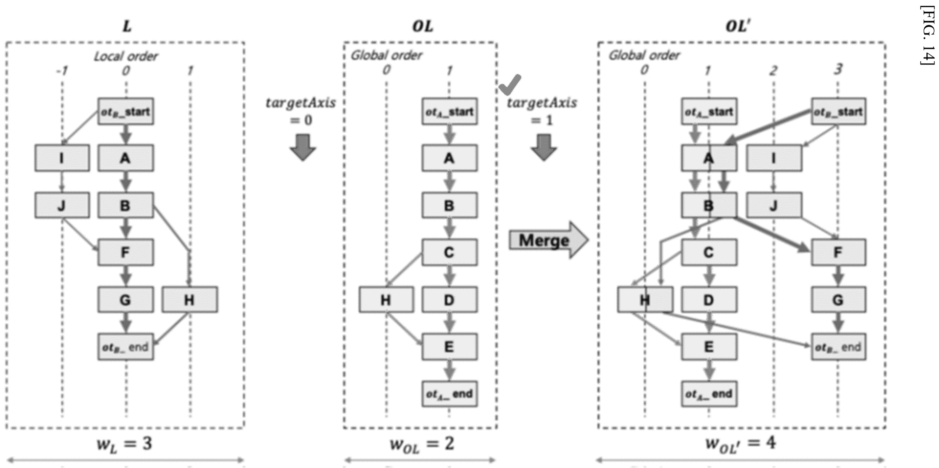

FIG. 14 shows one example in which a layout L of object type B is disposed on target object type axis 1 (right side of object type A) in OL initialized with object type A.

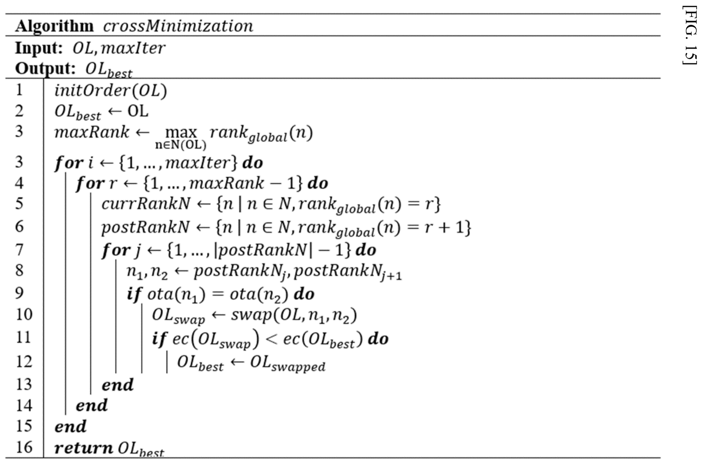

FIG. 15 shows one example of a Cross minimization algorithm.

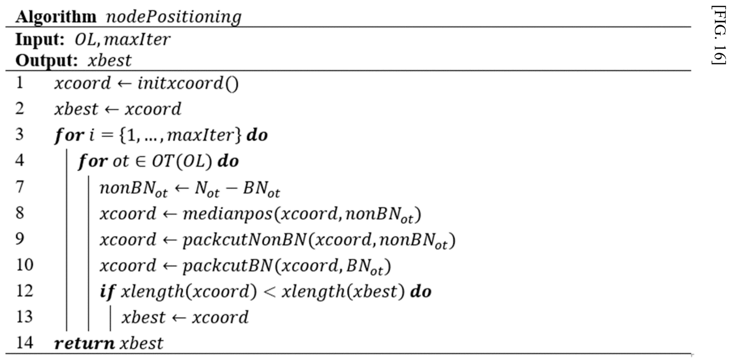

FIG. 16 shows one example of a Node positioning algorithm used to calculate coordinates of nodes.

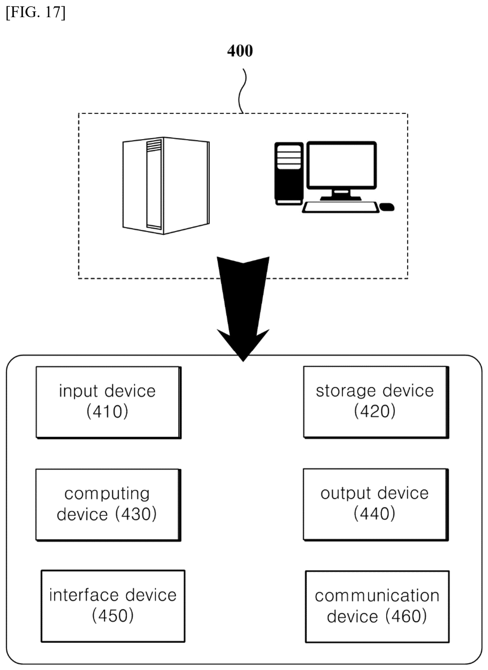

FIG. 17 shows a configuration of one example of an embodiment of a process mining apparatus (400).

### DETAILED DESCRIPTION

The technology described below may be variously modified and may include various embodiments. Specific embodiments of the technology described below may be illustrated in the drawings of the specification. However, the same is for describing the technology described below, and is not intended to limit the technology described below to a specific embodiment. Therefore, it should be understood that all modifications, equivalents, and substitutes included in the spirit and technical scope of the technology described below are included in the technology described below.

Terms such as first, second, A, and B may be used to describe various constituent elements. However, the above terms are used only to distinguish one constituent element from other constituent elements, and are not intended to limit the constituent elements by the above terms. For example, without departing from the scope of the technology described below, a first constituent element may be referred to as a second constituent element, and similarly, a second constituent element may also be referred to as a first constituent element. The term "and/or" includes any combination of a plurality of related listed items or any one among a plurality of related listed items.

In the terms used below, an expression in the singular should be understood as including an expression in the plural unless clearly interpreted otherwise from the context, and terms such as "comprising" should be understood as meaning that stated features, numbers, steps, operations, constituent elements, parts, or combinations thereof are present, and not as excluding the presence or addition possibility of one or more other features, numbers, steps, operations, constituent elements, parts, or combinations thereof.

Before giving a detailed description of the drawings, it is intended to clarify that the division of constituent units in the present specification is merely based on the main functions respectively undertaken by the constituent units. That is, two or more constituent units to be described below may be combined into one constituent unit, or one constituent unit may be provided by being divided into two or more units according to more subdivided functions. In addition, each of the constituent units to be described below may additionally perform some or all of the functions undertaken by another constituent unit, in addition to the main function undertaken thereby, and some functions among the main functions undertaken by each constituent unit may, of course, be exclusively performed by another constituent unit.

Further, in performing a method or an operation method, each process constituting the method may occur differently from the stated order unless a specific order is clearly stated from the context. That is, each process may occur in the same order as the stated order, may be performed substantially simultaneously, or may be performed in the reverse order.

Where terms such as "comprise," "have," "include," "contain," "constitute," "made of," "formed of," and "composed of" are used with respect to one or more elements (e.g., constituent elements, structures, groups, circuits, networks, members, parts, regions, steps, operations, and the like), one or more other elements may be added unless a limiting expression such as "only" is used. Terms used in the present disclosure are for describing specific exemplary embodiments, and are not intended to limit the scope of the present disclosure. A singular term includes a plural term unless clearly interpreted otherwise from the context. For example, one element may be one or more, and may include a plurality of elements. "Exemplary" is used in the sense of illustration or explanation. "Embodiments," "examples," "aspects," and the like should not be construed as being more excellent than or preferable to other implementations. Further, "may" includes all meanings of "can."

Unless expressly stated otherwise, any element, feature, or related information (e.g., level, range, dimension, and the like) is construed as including an error or tolerance range. Such an error range may occur due to various factors such as process factors, internal or external influences, noise, and the like. Numerical values are construed as including an error range unless expressly stated otherwise.

In describing a temporal relationship, expressions such as "after," "following," "before," and "prior to" may allow another event to intervene therebetween unless a limiting expression such as "immediately" is used.

"Each other" and "one another" may be used interchangeably. "One or more among" and "one or more of" may be used interchangeably. "Or" has an inclusive meaning rather than an exclusive meaning. For example, "a or b" includes a, b, or both a and b. Features of various embodiments of the present disclosure may be partially or entirely combined, and may be implemented independently or dependently on each other. Each constituent element may be operatively coupled and configured.

The technology described below discloses a process mining method reflecting the following nine requirements. The requirements induce arrangement such that object types having many interactions are placed closely and object types having few interactions are placed distantly.

### [First requirement: checking by arranging a start node and an end node of each object type in different layers]

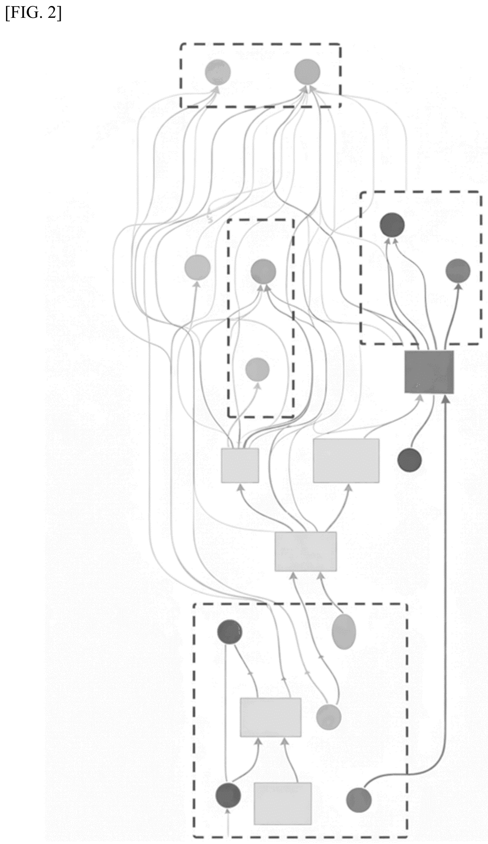

The first requirement is to arrange, as shown in FIG. 2, in consideration of a precedence relationship between a start node and an end node for each object type. In some process layouts, a start node and an end node for each object type are arranged in the same layer, respectively, to clarify start and end time points of the object type. However, in order to allow the start and end time points for each object type to be relatively known, it is necessary to arrange layers of the start node and the end node according to the precedence relationship for each object type.

### [Second requirement: checking by distinguishing a flow of each object type with a unique edge color].

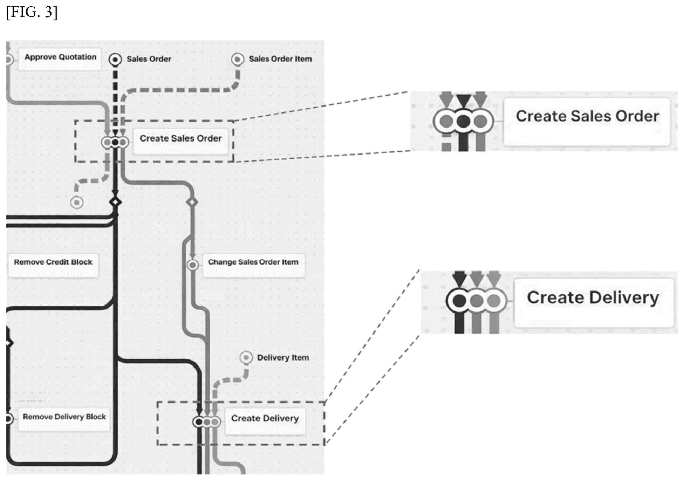

The second requirement is to distinguish, as shown in FIG. 3, the flow of each object type by different colors.

### [Third requirement: distinguishing a node by color according to the corresponding object type, and displaying the same while maintaining a consistent color order.]

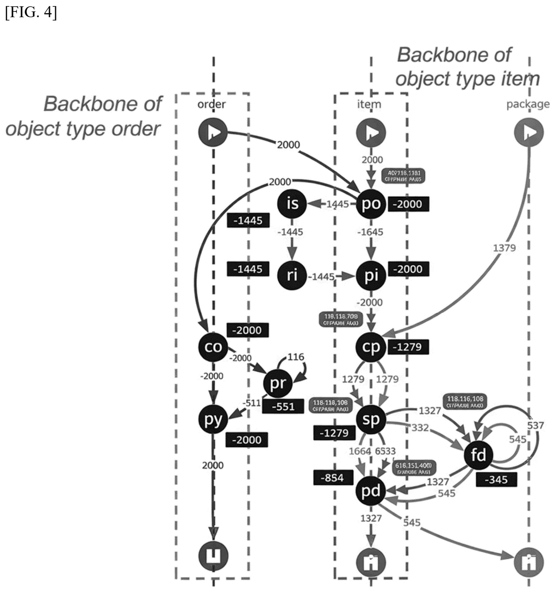

The third requirement is to distinguish, as shown in FIG. 4, the flow of each object type by different colors, and then maintain an order of the colors consistently.

### [Fourth requirement: checking by placing nodes of object types having active interactions closely.]

The fourth requirement is, as shown in FIG. 4, to place object types having many interactions closely and place object types having few interactions distantly.

### [Fifth requirement: assigning a vertical axis to each object type, and checking by aligning a main axis along the corresponding axis.]

The fifth requirement is that each object type has a vertical axis, and a main flow of the object type is arranged at a center of the axis.

### [Sixth requirement: checking by aligning nodes of each object type along a vertical axis.]

The sixth requirement is a requirement to arrange nodes belonging to the object type at a center of the axis.

### [Seventh requirement: checking by aligning the vertical axis to match a flow of time.]

The seventh requirement is a requirement that an order of nodes arranged from top to bottom should match, as much as possible, a flow of time in which a process is performed.

### [Eighth requirement: checking with a layout in which edge crossings are minimized.]

The eighth requirement is a requirement for minimizing crossings of edges.

### [Ninth requirement: checking with a layout in which space utilization is optimized.]

The ninth requirement is a requirement that space utilization should be minimized.

FIG. 5 is one embodiment in which the process mining apparatus 100 performs the process mining method.

The process mining apparatus 100 may be physically implemented in various forms. For example, the process mining apparatus 100 may have a form of a computer, a notebook, a smart device, a server, a chipset dedicated to data processing, or the like. However, the process mining apparatus 100 is not limited to the above-described examples.

At least one process mining apparatus 100 may be present. That is, the process mining method may be performed by one process mining apparatus, or may be divided and performed by at least one apparatus.

The process mining apparatus 100 may be an apparatus for performing the process mining method. The process mining apparatus 100 may acquire log data. The process mining apparatus 100 may perform process mining based on the log data. The process mining apparatus 100 may output a process layout result.

FIG. 6 shows one embodiment 200 of the process mining method.

The process mining apparatus may acquire log data (210).

The process mining apparatus may determine nodes and edges for each object type based on the log data.

The log data may be Event Log data. The log data may be data used for process mining.

The log data may be a data set of event records. The log data may be history data in which occurred individual events are recorded in sequence. For example, log data in a hospital may include a flow of an event in which user A received an order at 10:00, an event in which treatment started at 12:00, and an event in which payment was completed at 13:00. Similarly, the log data in the hospital may include data for not only user A but also other users (for example, users B, C, and D).

A node may indicate an event. For example, each node determined based on the log data in the hospital may indicate "order reception," "start of treatment," and "payment completion."

An edge may indicate a flow between nodes. For example, an edge determined based on the log data in the hospital may indicate "an order of treatment start from order reception (order reception → treatment start)" and "an order of payment completion from treatment start (treatment start → payment completion)."

An object (or object) may be a subject performing an act. The object may be a subject that is a target of an event. An object type may mean a type of an object. For example, the object may be a person performing an act in a hospital, and the object type may be a patient. Alternatively, the object may be a person performing an act in a hospital, and the object type may be a doctor.

The process mining apparatus may determine a backbone for each object type (230).

The backbone may be a central flow in a process. The backbone may be a most common flow and a highest-frequency flow in the process.

The process mining apparatus may assign ranks to nodes (240).

Rank and order may indicate the rank and order in the above-described rank and order system. Assigning rank and order may include determining a vertical position and a horizontal position of a node.

The process mining apparatus may generate process layouts for the respective object types (250).

A process layout for each object type may be a process layout for each type of object. For example, when the object types include a patient and a doctor, a process layout for the patient and a process layout for the doctor may be generated.

In order to generate the process layouts for the respective object types, a backbone-based process layout generation method may be used. In some embodiments, the backbone-based process layout generation method may employ a conventional stable process graph layout technique, such as the technique disclosed in Mennens et al., "A Stable Graph Layout Algorithm for Processes" (Computer Graphics Forum, 2019), in which a main path corresponding to most frequent behavior is centrally arranged, global ranks and global order constraints are determined based on event log data, and edge crossings are reduced while maintaining the determined order constraints. For example, by applying such a conventional layout technique to log data corresponding only to a patient object type, a process layout for the patient object type may be generated.

The process mining apparatus may generate an overall process layout by merging the process layouts for the respective object types.

The overall process layout may be a layout in which processes for the respective object types are all reflected. For example, the overall process layout may be a process layout in which a process layout for the patient and a process layout for the doctor are merged.

Merging the process layouts for the respective object types may include, after determining a main object type, selecting an object type similar to the main object type as a target object type, and adding the target object type to the main object type. A specific method will be described through an embodiment described later.

Hereinafter, one embodiment of the process mining method will be described.

In the embodiment described below, an Object-Centric Event Log (OCEL) may be one in which log data recording interactions among various objects is structured and represented. In the embodiment described below, the Object-Centric Event Log (OCEL) may be defined as in Equation 1. $OCEL = \left(EV,OT,O,ET,{π}_{act},{π}_{time},{π}_{omap},{π}_{otype},{π}_{atype}\leq \right)$

In Equation 1, EV may be a set of events included in the log data. In Equation 1, OT may be a set of object types included in the log data. In Equation 1, O may be a set of object IDs included in the log data. In Equation 1, ET may be a set of event types (activities) included in the log data.

In Equation 1, π_{act} may be a function returning a type of a given event (EV → EV). In Equation 1, τₜᵢₘₑ may be a function returning a time of a given event (EV → T). In Equation 1, πₒₘₐₚ may be a function returning an object included in a given event (EV → O). In Equation 1, π_{otype} may be a function returning an object type of a given object (O → OT). In Equation 1, π_{atype} may be a function returning types of objects included in a given event (EV → OT). In Equation 1, ≤ may be a criterion for sorting events according to time.

In one embodiment, the process mining method may include preparing log data.

The preparing of the log data may be a step of generating/extracting data required from the log data in order to generate a process layout.

The preparing of the log data may include at least one of a process of extracting nodes and edges, a process of extracting nodes and edges according to object types, and a process of extracting traces and variants.

The process of extracting nodes may be a process of securing nodes from the OCEL. Equation 2 is one of equations used to secure a node set N to be included in the process layout from the OCEL. $N = \left\{{π}_{act}\left(ev\right)\left|ev∈EV\right.\right\} ∪ {N}_{start} ∪ {N}_{end}$

In Equation 2, Nₛₜₐᵣₜ may mean a start node set of object types. In Equation 2, N_{end} may mean an end node set of object types. For example, when OT = {ot_{A}, ot_{B}}, Nₛₜₐᵣₜ may be {start_{otA}, star_{otB}}. Further, Nend may be {end_{otA}, end_{otB}}.

The process of extracting edges may be a process of securing edges from the OCEL. Equation 3 is one of equations used to secure an edge set E included in the process layout from the OCEL. $\begin{matrix}E = \left\{\left({n}_{i}, {n}_{j}, ot\right)\left|∃o ∈0,{π}_{otype}\left(o\right)=ot,∃{ev}_{1},{ev}_{2}∈EV,\right.\right. \\ \left.{π}_{act}\left({ev}_{1}\right)={n}_{i},{π}_{act}\left({ev}_{2}\right)={n}_{j},o∈{π}_{omap}\left({ev}_{1}\right)∩{π}_{omap}\left({ev}_{2}\right)\right\} .\end{matrix}$

As can be seen in Equation 3, finding the edge set E may be extracting object types of an object performing a preceding event (ev₁) and a succeeding event (ev₂), and adding a relationship between an activity (nᵢ) of the preceding event and an activity (nⱼ) of the succeeding event to an edge. For example, when a set of objects performing an activity "order (ev₁)" is {o₁, o₂, o₃}, a set of objects performing an activity "payment (ev₂)" is {o₂, o₃}, and object types of o₂ and o₃ are "employee" and "customer," two edges (order, payment, employee) and (order, payment, customer) are included in the edge set E.

The process of extracting nodes and edges according to object types may be a process of classifying according to object types. Equation 4 is one of equations used to extract nodes and edges for each object type. $\begin{matrix}{N}_{ot} = \left\{n\left|o∈ {π}_{omap}\left(ev\right),ev∈ EV,{π}_{act}\left(ev\right)=n,{π}_{otype}\left(o\right)=ot\right.\right\} \\ {E}_{ot} = \left\{e\left|e∈E,{π}_{etype}\left(e\right)=ot\right.\right\}\end{matrix}$

In Equation 4, π_{etype} is one of functions returning an object type of a given edge. (E → OT)

A trace may be a sequence in which activities performed by a specific object are arranged. Equation 5 is one of equations used to extract a trace. ${t}_{o} = \left〈start\left({π}_{otype}\left(o\right)\right),{π}_{act}\left({ev}_{1}\right),{π}_{act}\left({ev}_{2}\right),…,{π}_{act}\left({ev}_{n}\right),end\left({π}_{otype}\left(o\right)\right)\right〉$

In Equation 5, ev₁, ev₂, ..., evₙ are events arranged in chronological order, and may be expressed as in Equation 6. ${ev}_{1} , {ev}_{2} , … , {ev}_{n} ∈ \left\{ev\left|ev∈E,{π}_{omap}\left(ev\right)=o\right.\right\}$

In Equation 6, start(π_{otype}(o)) returns a start node according to an extracted object type after extracting an object type of a given object. That is, start(π_{otype}(o)) may be used to add a start node and an end node to a sequence of event types included in the log data.

A variant means a unique trace. A variant may be defined as in Equation 7. $V = \left\{{t}_{o}\left|o∈OT\right.\right\}$

Variants for each object type may be extracted as in Equation 8. ${V}_{ot} = \left\{{τ}_{o}\left|o∈O,{π}_{otype}\left(o\right)=ot\right.\right\}$

A sequence of a given variant v may be defined as in Equation 9. ${V}_{ot} = \left\{{τ}_{o}\left|o∈O,{π}_{otype}\left(o\right)=ot\right.\right\}$

In one embodiment, the process mining method may include determining a backbone for each object type.

A backbone may be composed of a set of nodes and edges constituting the backbone. {BB = (BN, BE)}

The backbone may be determined for each object type. Nodes and edges included in a highest-frequency variant for each object type may be determined as the backbone.

FIG. 7 shows one example of determining a backbone for each object type. As shown in FIG. 7, a backbone may be determined by selecting, for each object type, a variant having the highest frequency, and nodes and edges to be included in the backbone may be determined.

In one embodiment, the process mining method may include assigning rank and order to nodes for each object type.

In an object-centric process layout, since nodes included in object types overlap each other, ranks are assigned to nodes at one time for all object types, rather than assigning ranks to nodes for each object type.

In the process of assigning ranks to nodes, a first mathematical model based on Integer Programming may be used. Integer Programming is only one embodiment, and may be replaced by another optimization technique achieving the same purpose. For example, a heuristic method, rounding after linear programming relaxation, or a greedy algorithm may be used.

The first mathematical model may be a model mathematically expressing a problem of assigning ranks to nodes.

The first mathematical model may be a model for preventing precedence relationship violations. A precedence relationship violation means that, in a process layout, a start node of an edge e is arranged below an end node. Due to characteristics of the process layout, it is easy to understand a process when a flow continues from top to bottom. Accordingly, it is necessary to minimize such precedence relationships. A precedence relationship violation may be defined as in Equation 10. $α = max \left(0,rank\left(snode\left(e\right)\right)+1-rank\left(enode\left(e\right.\right)\right)$

In Equation 10, snode is a function returning a start node of a given edge. (E → N). In Equation 10, e_{node} is a function returning an end node of a given edge. (E → N)

The first mathematical model uses decision variables. Decision variables used by the first mathematical model are as follows.
xₙ: a variable indicating a rank of a given node. (xₙ∈Z, xₙ≥1).
yₑ: a variable indicating a length of an edge. (y_{c}∈Z, yₑ≥0)
αₑ: a variable indicating a degree of precedence relationship violation of an edge. (α∈Z, αₑ≥0)

The first mathematical model may be configured to determine, by using a node set N and an edge set E to be included in the object-centric process layout as inputs, an integer rank value rank(n) for each node n E N.

The first mathematical model may assign ranks to nodes such that a value of a first objective function is minimized.

The first objective function may be a function for minimizing precedence relationship violations and lengths of edges.

Equation 11 shows one example of the first objective function. ${\sum }_{i = 1}^{\left|E\right|} {freq}_{{e}_{i}} \times {α}_{i} + {y}_{i}$

The first mathematical model assigns ranks to nodes such that at least one first constraint condition is satisfied.

The first constraint condition may include a constraint condition such that an end node is arranged below a start node. This may be expressed as in Equation 12. ${x}_{snode \left(e\right)} + 1 \leq {x}_{enode \left(e\right)} + {α}_{e} ∀ e ∈ E$

The first constraint condition may include a constraint condition that start nodes and end nodes of object types should be arranged respectively above and below nodes included in the corresponding object type. This may be expressed as in Equation 13 and Equation 14. ${x}_{start \left(ot\right)} + 1 \leq {x}_{{n}_{j}} ∀ \left({n}_{i}, {n}_{j}, ot\right) ∈ {E}_{ot} , {n}_{i} \neq start \left(ot\right)$ ${x}_{end \left(ot\right)} \geq {x}_{{n}_{i}} + 1 ∀ \left({n}_{i}, {n}_{j}, ot\right) ∈ {E}_{ot} , {n}_{j} \neq end \left(ot\right)$

The first constraint condition may include a constraint condition for calculating a length of an edge. This may be expressed as in Equation 15 and Equation 16. ${y}_{e} \geq {x}_{snode \left(e\right)} - {x}_{enode \left(e\right)} ∀ e ∈ E$ ${y}_{e} \geq - \left({x}_{snode \left(e\right)}-{x}_{enode \left(e\right)}\right) ∀ e ∈ E$

FIG. 8 shows one example in which ranks are assigned to nodes. As shown in FIG. 8, ranks may be determined for nodes at one time for all object types.

By assigning ranks to nodes, a rank function may be used. The rank function may be a function returning a rank assigned to a node (rank(n) = xₙ).

The rank function may be classified into rank_{local} and rank_{global}. rank_{local} is a function returning a rank of a node in the overall process layout. rank_{global} is a function returning a rank determined when generating a process layout for each object type.

In one embodiment, the process mining method may include generating process layouts for the respective object types.

A process layout L may be defined as in Equation 17. $L = \left(N, E, BB, {rank}_{local}, {order}_{local}, w, h\right)$

In Equation 17, N is a node set included in the process layout. In Equation 17, E is an edge set included in the process layout. In Equation 17, BB is a backbone of the process layout. In Equation 17, rank_{local} is a function returning a rank in an object type determined when generating the process layout. In Equation 17, orden_{ocal} is a function returning an order in an object type determined when generating the process layout.

In Equation 17, w is a width of the layout. In Equation 17, w may be expressed as in Equation 18. $w = {max}_{n ∈ N} {order}_{local} \left(n\right) - {min}_{n ∈ N} {order}_{local} \left(n\right)$

In Equation 17, h is a height of the layout. In Equation 17, h may be expressed as in Equation 19. $h = {max}_{n ∈ N} {rank}_{local} \left(n\right)$

When process layouts for the respective object types are generated, Equation 20 may be obtained for all object types (ot ∈ OT). ${L}_{ot} = \left({N}_{ot}, {E}_{ot}, {BB}_{ot}, {rank}_{ot , local}, {order}_{ot , local}, {w}_{ot}, {h}_{ot}\right)$

In one embodiment, the process mining method may include generating an overall process layout by merging the process layouts for the respective object types.

FIG. 9 shows one example 300 of generating an overall process layout by merging the process layouts for the respective object types.

The step of merging the process layouts may include a process of selecting a main object type (310), a process of selecting, as a target object type, an object type most similar to the main object type (320), a process of deriving merge candidate groups according to the selected target object type (330), a process of generating candidate merged process layouts corresponding to the derived merge candidate groups (340), and a process of generating the overall process layout by selecting an optimal merged layout from among the candidate merged process layouts (350).

The step of merging the process layouts may be repeatedly performed. For example, the step of merging the process layouts may be repeated until there is no more object type to be merged. Specifically, the process of selecting a similar object type, the process of deriving candidate groups of object type axes, the process of merging layouts for the candidate groups, and the process of determining an optimal object type axis may be repeated.

An object-centric process layout may be defined as in Equation 21. $OL = \left(N, E, BB, OT, {rank}_{global}, {order}_{global}, w, h, not, ota, nota\right)$

In Equation 21, N is a set of nodes included in the process layout. In Equation 21, E is a set of edges included in the process layout. In Equation 21, BB is a set of backbones of the respective object types. That is, BB = {BBₒₜ₁, BBₒₜ₂, ..., BB_{ot|OT|}, }.

In Equation 21, OT is a set of object types merged in the process layout. In Equation 21, rank_{global} and order_{global} are functions returning node rank and order values on the object-centric process layout, respectively.

In Equation 21, w and h are functions for calculating a width and a height of the layout, respectively. w and h may be calculated through Equation 22 and Equation 23. $w = {max}_{n ∈ N} \left(order\left(n\right)\right) - {min}_{n ∈ N} \left(order\left(n\right)\right) + 1 ,$ $h = {max}_{n ∈ N} rank \left(n\right)$

In Equation 21, not returns an object type of nodes in the layout.

In Equation 21, ota is a function returning an order of axes occupied by object types. Assuming that ota(ot_{A})=0, ota(ot_{B})=1, and ota(ot_{C})=2, nodes included in object type A are positioned at a far left side, nodes included in object type B are positioned in a middle, and nodes included in object type C are arranged at a far right side.

In Equation 21, nota returns an object type of an axis on which a node is arranged in the layout. For example, assuming that node A has π_{atype}(A)={ot_{A}, ot_{B}}, node A is performed by two object types, but is arranged on an axis of one object type in the layout. If node A is arranged on an axis of ot_{A}, nota(A)=ot_{A}. Alternatively, if node A is arranged on ot_{B}, nota(A)=ot_{B}.

The process of selecting the main object type (310) may be a process of selecting, as the main object, an object type having a largest number of shared nodes with another object type.

Shared nodes may be nodes commonly included in process layouts corresponding to different object types. For example, when object types are "patient" and "doctor" in a hospital process, a "treatment" event may be performed or referenced by both the patient and the doctor. Accordingly, a node corresponding to "treatment" may be a shared node between the patient type and the doctor type.

A number of shared nodes may be used as an indicator indicating a degree of interaction between two object types. That is, as the number of shared nodes increases, it may be determined that the two object types are closely connected in the process. Accordingly, an object type having a largest number of shared nodes with other object types may be selected as the main object type.

A definition of the process of selecting the main object type is as shown in Equation 24. ${ot}_{main} = {argmax}_{ot ∈ OT} \left|\left\{n∈\left.{N}_{ot}\right|\left|{π}_{atype}\left(n\right)\right|>1\right\}\right|$

After selecting the main object type, OL of Equation 21 is initialized as in Equation 25. $\begin{matrix}{N}_{OL} = {N}_{{L}_{{ot}_{main}}} , {E}_{OL} = {E}_{{L}_{{ot}_{main}}} , BB = \left\{{BB}_{{ot}_{main}}\right\} , {order}_{global} = {order}_{{ot}_{main , local}} , w = {w}_{{ot}_{main}} , \\ h = {h}_{{ot}_{main}} , nota \left({ot}_{main}\right) = 0 .\end{matrix}$

FIG. 10 shows one example of determining the main object type. As shown in FIG. 10, an object type (ot_{A}) sharing a largest number of nodes with another object type may be selected as the main object type.

The process of selecting, as the target object type, an object type most similar to the main object type (320) may be a process of selecting, as the target object type, an object type having a shortest distance from a process layout of the main object type.

The distance may be defined based on a number of nodes commonly included in layouts of two object types. Equation 26 is one of equations used when calculating the distance. $\begin{matrix}{ot}_{target} = {argmin}_{ot ∈ OT \left(OCEL\right) , ot ∉ OT \left(OL\right)} {dist}_{ocel} \left(OL, {L}_{ot}\right) \\ {dist}_{ocel} \left({G}_{A}, {G}_{B}\right) = 1 - \left(2\times \frac{\left|\left\{\left.n\right|n∈N\left({G}_{A}\right),n∈N\left({G}_{B}\right)\right\}\right|}{\left|N\left({G}_{A}\right)\right| + \left|N\left({G}_{B}\right)\right|}\right.\end{matrix}$

A distance between two given layouts becomes shorter as a number of nodes shared by the two layouts increases, and becomes longer as the number of shared nodes decreases.

FIG. 11 shows one example of selecting an object type most similar to another object type. As shown in FIG. 11, a distance between the main object (ot_{A}) and another object (ot_{B} and ot_{C}) may be calculated. For this, an equation such as Equation 26 may be used. Among calculated distances (1/3 and 3/7), an object (ot_{B}) having a distance of (1/3), which is a larger number, may be selected as a closest object type.

The process of deriving merge candidate groups according to merging of the selected target object type (330) may be a process of deriving candidate groups of object type axes. The process of deriving merge candidate groups according to merging of the selected target object type (330) is a process of deriving candidate groups for determining into which axis a process layout of the target object type is to be inserted. Candidates of a position of an axis into which the target object type (ot_{target}) is to be inserted are as shown in Equation 27. $C = \left\{\left.c\right|c=insert\left(targetAxis, {OT}_{seq}, {ot}_{target}\right),targetAxis∈\left\{0,…,\left|OT\left(OL\right)\right|\right.\right\}$

In Equation 27, OT_{seq} may be a sequence in which object types are arranged in an order of object type axes. That is, OT_{seq} = sort(OT(OL)). If OT_{seq} of OL is [ot_{A}, ot_{B}], targetAxis ∈ {0,1,2}, and possible c₁ = insert(0, OT_{seq}, ot_{target}) = [ot_{target}, ot_{A}, ot_{B}], c₂ = insert(1, OT_{seq}, ot_{target}) = [ot_{A}, ot_{target}, ot_{B}], and c₃ = insert(2, OT_{seq}, ot_{target}) = [ot_{A}, ot_{B}, ot_{target}], then C={c₁, c₂, c₃}.

FIG. 12 shows an example of candidate groups of object type axes. As shown in FIG. 12, the target object type may be arranged on a left side of object type A or on a right side thereof. That is, when only two object types are present, two merge candidate groups may be present. In other words, there may be two merge candidate groups: a candidate group in which object type A is arranged on a left side and object type B is arranged on a right side, and a candidate group in which object type A is arranged on a right side and object type B is arranged on a left side.

Conversely, when three object types are present, a total of three merge candidate groups may be present (for example, if A is a main object and B is a target object, a total of three candidate groups B/A/C, A/B/C, and A/C/B may be present. At this time, since C is neither the main object nor the target object, C is not considered in the order).

The process of generating candidate merged process layouts corresponding to the derived merge candidate groups (340) may be a process of generating merged layouts for each candidate group of object type axes. That is, the process of generating candidate merged process layouts corresponding to the derived merge candidate groups (340) may be a process of generating a process layout for each object type arranged according to the merge candidate groups.

Assume that a modified object-centric process layout (OL') as shown in Equation 28 is generated by merging a layout L of the target object type into targetAxis in an already merged object-centric process layout OL. $OL ′ = \left(N′,E′,BB′,OT′,rank{′}_{global},order{′}_{global},w′,h′,not′,ota′,nota′\right)$

In this case, conditions such as Equations 29 to 31 may be satisfied. ${N}_{shared} = N ′ ∩ N \left(L\right) , {N}_{OL - shared} = N \left(OL′\right) - {N}_{shared} , {N}_{L - shared} = N \left(L\right) - {N}_{shared} .$ $\begin{matrix}N ′ = N \left(OL\right) ∪ N \left(L\right) \\ E ′ = E \left(OL\right) ∪ E \left(L\right) \\ BB ′ = BB ∪ BB \left(L\right) \\ OT ′ = OT \left(OL\right) ∪ \left\{{ot}_{target}\right\} \\ rank ′ = rank\end{matrix}$ $\begin{matrix}not ′ \left(n\right) = \left\{\begin{matrix}not \left(n\right) if n ∈ {N}_{OL - shared} \\ not \left(n\right) ∪ \left\{{ot}_{target}\right\} if n ∈ {N}_{shared} \\ \left\{{ot}_{target}\right\} if n ∈ {N}_{L - shared}\end{matrix}\right. \\ ota ′ \left(ot\right) = \left\{\begin{matrix}targetAxis if ot = {ot}_{target} \\ ota \left(ot\right) if ot \neq {ot}_{target} , ota \left(ot\right) < targetAxis \\ ota \left(ot\right) + 1 if ot \neq {ot}_{target} , ota \left(ot\right) \geq targetAxis\end{matrix}\right. \\ nota ′ \left(n\right) = \left\{\begin{matrix}nota \left(n\right) if n ∈ N \left(OL\right) \\ {ot}_{target} else\end{matrix}\right. \\ {order}_{global}^{′} \left(n\right) = \left\{\begin{matrix}{order}_{global} \left(n\right) if ota \left(nota′\left(n\right)\right) < targetAxis \\ lm + lmo \left(L\right) + {order}_{local} \left(n\right) + 1 if ota \left(nota′\left(n\right)\right) = targetAxis \\ {order}_{global} \left(n\right) + {w}_{L} - 1 if ota \left(nota′\left(n\right)\right) > targetAxis\end{matrix}\right.\end{matrix}$

In Equation 31, lm is a function returning a left margin of an axis of the target object type. lm may be expressed as in Equation 32. ${max}_{n ∈ N ′ , nora ′ \left(n\right) < targetAxis} {order}_{global} \left(n\right) + 1$

In Equation 31, lmo is a function returning an absolute value of an order of a node arranged at a farthest left side in an individual process layout. lmo may be expressed as in Equation 33. $lmo = - {max}_{n ∈ N \left(L\right) , {order}_{local} \left(n\right) \leq 0} \left.\left({order}_{local}\left(n\right)\right)\right)$

As described above, process layouts may be merged for each object type axis. Accordingly, object-centric process layouts from OL'_{c1} to OL'_{c2}, ..., and OL'c|C| may be generated.

FIG. 13 is one example in which a layout L of object type B is disposed on target object type axis 0 (a left side of object type A) in OL initialized with object type A. In this case, a relationship such as Equation 34 may be satisfied. $\begin{matrix}- {N}_{shared} = \left\{A, B, H\right\} \\ - {N}_{OL - shared} = \left\{o{t}_{A}start,C,D,E,o{t}_{A}end\right\} \\ - {N}_{L - shared} = \left\{o{t}_{B}start,F,G,I,J,o{t}_{B}end\right\} \\ - ota ′ \left(o{t}_{A}\right) = ota \left(o{t}_{A}\right) + 1 = 0 + 1 = 1 \\ - ota ′ \left(o{t}_{B}\right) = targetAxis = 0 \\ - nota ′ \left(n\right) = o {t}_{A} for n ∈ N \left(OL\right) \left.Ex\right) nota ′ \left(A\right) = o {t}_{A} , nota ′ \left(H\right) = o {t}_{A} \\ - nota ′ \left(n\right) = o {t}_{B} for n ∈ N \left(L\right) - N \left(OL\right) . \left.Ex\right) nota ′ \left(F\right) = o {t}_{B} \\ - ota \left(nota′\left(n\right)\right) < targetAxis \to There are no nodes \\ - ota \left(nota′\left(n\right)\right) = targetAxis \to Nodes o {t}_{B} start , F , G , I , J , o {t}_{B} end \\ \left.Ex\right) orde {r}_{global}^{′} \left(J\right) = lm + lmo \left(L\right) + orde {r}_{local} \left(J\right) + 1 = 0 + 1 - 1 = 0 \\ orde {r}_{global}^{′} \left(G\right) = lm + lmo \left(L\right) + orde {r}_{local} \left(G\right) + 1 = 0 + 1 + 0 = 1 \\ - ota \left(nota′\left(n\right)\right) > targetAxis \to Nodes o {t}_{A} start , A , B , C , D , o {t}_{A} end , H \\ \left.Ex\right) orde {r}_{global}^{′} \left(A\right) = orde {r}_{global} \left(A\right) + {w}_{L} - 1 = 1 + 3 - 1 = 3 . orde {r}_{global}^{′} \left(H\right) = \\ orde {r}_{global} \left(H\right) + {w}_{L} - 1 = 0 + 3 - 1 = 2\end{matrix}$

FIG. 14 is one example in which a layout L of object type B is disposed on target object type axis 1 (a right side of object type A) in OL initialized with object type A. In this case, a relationship such as Equation 35 may be satisfied. $\begin{matrix}- {N}_{shared} = \left\{A, B, H\right\} \\ - {N}_{OL - shared} = \left\{o{t}_{A}start,C,D,E,o{t}_{A}end\right\} \\ - {N}_{L - shared} = \left\{o{t}_{B}start,F,G,I,J,o{t}_{B}end\right\} \\ - ota ′ \left(o{t}_{A}\right) = ota \left(o{t}_{A}\right) = 0 \\ - ota ′ \left(o{t}_{B}\right) = targetAxis = 1 \\ - nota ′ \left(n\right) = o {t}_{A} for n ∈ N \left(OL\right) . \left.Ex\right) nota ′ \left(A\right) = o {t}_{A} , nota ′ \left(H\right) = o {t}_{A} \\ - nota ′ \left(n\right) = o {t}_{B} for n ∈ N \left(L\right) - N \left(OL\right) . \left.Ex\right) nota ′ \left(F\right) = o {t}_{B} \\ - ota \left(nota′\left(n\right)\right) < targetAxis \to Nodes o {t}_{A} start , A , B , C , D , o {t}_{A} end , H \\ \left.Ex\right) orde {r}_{global}^{′} \left(A\right) = orde {r}_{global} \left(A\right) = 1 . orde {r}_{global}^{′} \left(H\right) = orde {r}_{global} \left(H\right) = 0 \\ ota \left(nota′\left(n\right)\right) = targetAxis \to Nodes o {t}_{B} start , F , G , I , J , o {t}_{B} end \\ \left.Ex\right) orde {r}_{global}^{′} \left(J\right) = lm + lmo \left(L\right) + orde {r}_{local} \left(J\right) + 1 = 2 + 1 - 1 = 2 . orde {r}_{global}^{′} \left(G\right) = lm + \\ lmo \left(L\right) + orde {r}_{local} \left(G\right) + 1 = 2 + 1 + 0 = 3 \\ - ota \left(nota′\left(n\right)\right) > targetAxis \to There are no nodes\end{matrix}$

The process of generating the overall process layout by selecting an optimal merged layout from among the candidate merged process layouts (350) may be a process of calculating costs of the generated candidate merged process layouts and selecting a candidate merged process layout showing a lowest cost. In the process of calculating the costs, a cost function may be used. Equation 36 shows one example of the cost function. This may be referred to as a second objective function. $\begin{matrix}cost \left(OL\right) = {λ}_{1} \sqrt{\frac{{\sum }_{i = 1}^{\left|OT\right|} {\sum }_{j = i + 1}^{\left|OT\right|} {\left({dr}_{ocel}\left({ot}_{i}, {ot}_{j}\right)-{dr}_{layout}\left({ot}_{i}, {ot}_{j}\right)\right)}^{2}}{{\sum }_{i = 1}^{\left|OT\right|} {\sum }_{j = i + 1}^{\left|OT\right|} {dr}_{ocel} {\left({ot}_{i}, {ot}_{j}\right)}^{2}}} + {λ}_{2} \frac{ec \left(OL\right)}{{\left|E\left(OL\right)\right|}^{2}} \\ {dr}_{ocel} \left({ot}_{i}, {ot}_{j}\right) = rank \left({dist}_{ocel}\left({ot}_{i}, {ot}_{j}\right),\left\{\left.{dist}_{ocel}\left({ot}_{i}, {ot}_{j}\right)\right|{ot}_{i},{ot}_{j}∈OT,{ot}_{i}\neq {ot}_{j}\right\}\right) \\ {dr}_{layout} \left({ot}_{i}, {ot}_{j}\right) = rank \left({dist}_{layout}\left({ot}_{i}, {ot}_{j}\right),\left\{\left.{dist}_{layout}\left({ot}_{i}, {ot}_{j}\right)\right|{ot}_{i},{ot}_{j}∈OT,{ot}_{i}\neq {ot}_{j}\right\}\right) \\ {dist}_{layout} \left({ot}_{i}, {ot}_{j}\right) = \left|centroid\left({ot}_{i}\right)-centroid\left({ot}_{j}\right)\right| \\ centroid \left(ot\right) = mean \left(\left\{\left.{order}_{global}\left(n\right)\right|n∈N\left(OL\right),not\left(n\right)∩ot\neq ∅\right\}\right)\end{matrix}$

In Equation 36, dr_{ocel}(otᵢ, otⱼ) is a function returning a distance rank between two object types on the OCEL. In Equation 36, λ1 and λ2 are weights for adjusting importances of two terms.

A first term of the cost function may be a function calculating how much a rank of a distance between two object types in an arranged layout differs from a rank of a distance between the two object types in an actual event log. The first term of the objective function may be a term quantitatively indicating a difference between a distance structure between object types in the event log and a distance structure between object types in the layout. The first term causes, when a distance between two object types in the event log is short, the two object types to be arranged closely also in the layout. The first term causes, when a distance between two object types in the event log is long, the two object types to be arranged distantly also in the layout.

Here, dr_{ocel} may be a distance based on an event log. dr_{ocel}(otᵢ, otⱼ) may be a value obtained by sorting distocel values for all object type pairs and assigning relative ranks thereto. Here, dist_{ocel}(otᵢ, otⱼ) may be a value indicating a degree of interaction between object types otᵢ and otⱼ on an Object-Centric Event Log (OCEL). Here, drlayout(otᵢ, otⱼ) may be a value obtained by sorting distlayout values for all object type pairs and assigning relative ranks thereto. Here, distlayout(otᵢ, otⱼ) may be a value indicating a spatial distance between two object types on a currently generated object-centric process layout. Here, centroid(ot) may be defined as an average value of global orders (order_{global}) of nodes belonging to the object type. This may mean a center position of an axis of the corresponding object type.

dr_{ocel} is "a relative distance rank between object types on a log," and dr_{layout} is "a relative distance rank between object types on a layout." Accordingly, when dr_{ocel} ≈ dr_{layout}, it may be seen that the layout reflects a log structure well. Conversely, when a difference between dr_{ocel} and dr_{layout} is large, it may be confirmed that the arrangement is one in which the log structure is distorted. In order to reflect this difference, the first term of the objective function may be utilized.

For example, assume a case in which object types are "patient (P)," "doctor (D)," and "laboratory (L)" in a hospital process. Accordingly, dist_{ocel} values may be set as patient-doctor (P-D)=1, patient-laboratory (P-L)=2, and doctor-laboratory (D-L)=3. When relative ranks are assigned based on the above distance values, dr_{ocel} ranks may also be formed identically such that a patient-doctor pair is ranked first, a patient-laboratory pair is ranked second, and a doctor-laboratory pair is ranked third. This means that, on the event log, the patient and the doctor interact most closely, and the doctor and the laboratory interact least. Now, assume that center positions (centroid) of the respective object types on the object-centric process layout are arranged as patient (P)=1, doctor (D)=2, and laboratory (L)=5. In this case, layout-based distances (dist_{layout}) may be calculated as absolute value differences between centers of the respective object types, and may be calculated as patient-doctor (P-D)=1, patient-laboratory (P-L)=4, and doctor-laboratory (D-L)=3. When relative ranks are assigned to the dist_{layout} values, dr_{layout} values are calculated. If dr_{layout} ranks are formed similarly to dr_{occl} ranks, this means that arrangement of the object types on the layout faithfully reflects an object interaction structure on the event log. Conversely, when a difference between the two ranks appears large, it may be determined that the layout distorts the structure on the log.

A second term of the cost function calculates how many edge overlaps are present in a layout derived by merging a new object type. The second term of the objective function may be a term for quantitatively evaluating a degree of crossing or overlap of edges occurring on the layout. The second term is calculated such that, as edge overlaps increase, a cost increases, and as edge overlaps decrease, the cost decreases. Through the same, the object-centric process layout having a lowest cost is updated as OL.

In the object-centric process layout, since nodes and edges corresponding to a plurality of object types are simultaneously arranged, a plurality of crossings between edges may occur. Crossings or overlaps of edges may increase visual complexity and may hinder intuitive understanding of a process flow.

In order to prevent this, a number of edge overlaps occurring in the layout OL may be defined as ec(OL). Here, ec(OL) may include a number of cases in which two edges cross each other or overlap on a same path.

For example, assume a case in which object types are "patient (P)," "doctor (D)," and "laboratory (L)" in a hospital process. In a state in which a plurality of candidate object-centric process layouts are generated, a degree of edge crossing may be evaluated for each candidate layout. Assume that, in a first candidate layout, an edge between the patient and the doctor and an edge between the patient and the laboratory pass through a same horizontal section and cross each other at a plurality of points, such that a total of eight edge overlaps occur. At this time, when a total number of edges included in the corresponding layout is 10, an edge overlap term may be calculated as 8/100 by being normalized by a square of the total number of edges. This means that the layout is one in which a relatively large number of edge crossings occur. On the other hand, assume that, in a second candidate layout, by arranging the patient and the doctor adjacent to each other and arranging the laboratory at a relatively distant position by differently arranging object type axes, only two edge crossings occur. Likewise, when the total number of edges is 10, the edge overlap term may be calculated as 2/100. In this case, since the second candidate layout has a smaller value of the edge overlap term than the first candidate layout, the second candidate layout may be evaluated as a layout having lower visual complexity and improved readability. Accordingly, the edge overlap term may be used as an indicator for quantitatively comparing visual clarity among candidate layouts, and may be considered together with a structure preservation term and used as a criterion for determining a final object-centric process layout.

In one embodiment, the process mining method may include minimizing edge overlaps.

The step of minimizing edge overlaps may be performed after layouts are merged for all object types. In one embodiment, the step of minimizing edge overlaps may be performed through a Crossminimization algorithm. FIG. 15 shows one example of the Crossminimization algorithm. The Crossminimization algorithm may allow only adjacent nodes arranged in a same object type to be swapped with each other. This is different from a conventional method in which two adjacent nodes, both present in a same rank, are swapped in a process of swapping nodes. This is for minimizing edge overlaps while maintaining object type axes on which the nodes are arranged.

In one embodiment, the process mining method may include calculating coordinates of nodes.

The step of calculating coordinates of nodes may be a step of calculating x and y coordinate values of the nodes. First, x coordinates of the nodes are updated by using median values of x coordinates of adjacent nodes. Thereafter, packing of nodes that are not backbone nodes to a left side is performed for each object type. Thereafter, packing of backbone nodes to the left side is performed. If, after calculation of the x coordinates, lengths of edges are reduced with respect to an x-axis, x coordinates at that time are updated as optimal x coordinates. Further, this process is repeatedly performed a preset number of times.

FIG. 16 shows one example of a Nodepositioning algorithm used to calculate coordinates of nodes.

FIG. 17 shows a configuration of one embodiment of the process mining apparatus 400.

The process mining apparatus 400 may correspond to the process mining apparatus 100 described above with reference to FIG. 1 and the like. That is, the process mining apparatus 400 may be an apparatus for performing the above-described process mining method.

The process mining apparatus 400 may include at least one input device 410, a storage device 420, a computing device 430, an output device 440, an interface device 450, and a communication device 460.

The input device 410 may receive data, information, a model, or the like required to perform the above-described process mining method. The input device 410 may receive log data or a process layout. The input device 410 may receive a mathematical model. The input device 410 may receive training data required to train the mathematical model. The input device 410 may include a device for inputting a predetermined command or data, such as a keyboard, a mouse, a touch screen, a joystick, a trackball, a touch pad, a scanner, or a webcam. The input device 410 may include a configuration for receiving data through a separate storage device, such as a USB, a CD, or a hard disk. The input device 410 may also receive data through a separate measuring device or a separate database. The input device 410 may also receive data through the communication device 460 in a wired or wireless manner. The input device 410 may also receive a control signal for controlling the process mining apparatus 400.

The storage device 420 may store data, information, a model, or the like required to perform the above-described process mining method. The storage device 420 may store log data or a process layout. The storage device 420 may store a mathematical model. The storage device 420 may be a device storing predetermined data, information, a model, or the like. The storage device 420 may store data, information, a model, or the like input through the input device 410. The storage device 420 may store instructions causing the computing device 430 to perform operations required for the process mining method. The storage device 420 may store information generated in a process in which the computing device 430 performs computation. That is, the storage device 420 may include a memor_{y}. For example, the storage device may include an HDD (Hard Disk Drive), an SSD (Solid State Drive), a ROM, a RAM, a CD-ROM, a magnetic tape, or a floppy disk. The storage device 420 may store information generated in the process in which the computing device 430 performs computation. That is, the storage device 420 may include a memory. For example, the storage device may include an HDD (Hard Disk Drive), an SSD (Solid State Drive), a ROM, a RAM, a CD-ROM, a magnetic tape, or a floppy disk.

The computing device 430 may perform computation required to perform the above-described process mining method. The computing device 430 may perform computation required to determine nodes and edges for each object type based on the log data. The computing device 430 may perform computation required to determine backbones for the respective object types. The computing device 430 may perform computation required to assign ranks to the nodes. The computing device 430 may perform computation required to generate process layouts for the respective object types. The computing device 430 may perform computation required to generate an overall process layout by integrating the process layouts for the respective object types. The computing device 430 may be a device such as a processor, an AP (Application Processor), or a chip in which a program is embedded, the device processing data and performing predetermined computation. For example, the computing device 430 may include a CPU (Central Processing Unit), a GPU (Graphics Processing Unit), or an NPU (Neural Processing Unit). The computing device 430 may generate a control signal for controlling the process mining apparatus 400. The computing device 430 may generate a control signal for controlling the input device 410, the storage device 420, the output device 440, the interface device 450, and the communication device 460 included in the process mining apparatus 400.

The output device 440 may be a device outputting predetermined data, information, and a model. The output device 440 may be a device outputting predetermined data, information, and a model to an outside of the process mining apparatus 400. The output device 440 may output an interface required for a data processing process, input data, an analysis result, or the like. The output device 440 may include a device outputting data or the like through a tactile, visual, auditory, gustatory, or olfactory method. The output device 440 may be physically implemented in various forms, such as a display, a speaker, a vibration motor, or a document output device. The output device 440 may output data, information, a model, or the like stored in the storage device 420. The output device 440 may output data, information, a model, or the like generated in a process in which the computing device 430 performs computation. The output device 440 may output a result computed by the computing device 430.

The interface device 450 may be a device receiving a predetermined command and data from an outside. The interface device 450 may receive a control signal for controlling the process mining apparatus 400. The interface device 450 may output a result analyzed by the process mining apparatus 400. The interface device 450 may receive, from a physically connected input device or an external storage device, information required to perform the above-described process mining method.

The communication device 460 may receive information required to perform the above-described process mining method. The communication device 460 may receive a model required to perform the above-described process mining method. The communication device 460 may transmit and receive log data or a process layout. The communication device 460 may transmit and receive a mathematical model. The communication device 460 may receive a control signal required to control the process mining apparatus 400. The communication device 460 may transmit a result analyzed by the process mining apparatus 400. The communication device 460 may mean a configuration receiving and transmitting predetermined data, information, a model, or the like through a wired or wireless network. The communication device 460 may perform network communication such as Wi-Fi (Wireless Fidelity), Wi-Fi Direct, Bluetooth, UWB (Ultra-Wide Band), NFC (Near Field Communication), USB (Universal Serial Bus), HDMI (High Definition Multimedia Interface), or LAN (Local Area Network).

The above-described process mining method may be implemented as a program (or application) including an executable algorithm executable in a computer.

The program may be stored and provided in a transitory or non-transitory computer readable medium.

The transitory computer readable medium may mean various RAMs such as Static RAM (SRAM), Dynamic RAM (DRAM), Synchronous DRAM (SDRAM), Double Data Rate SDRAM (DDR SDRAM), Enhanced SDRAM (ESDRAM), Synclink DRAM (SLDRAM), and Direct Rambus RAM (DRRAM).

The non-transitory computer readable medium means a medium storing data semi-permanently rather than a medium storing data for a short moment, such as a register, a cache, or a memory, and being capable of being read by an apparatus. Specifically, the various applications or programs described above may be stored and provided in a non-transitory computer readable medium such as a CD, a DVD, a hard disk, a Blu-ray disk, a USB, a memory card, a ROM (read-only memory), a PROM (programmable read only memory), an EPROM (Erasable PROM, EPROM), an EEPROM (Electrically EPROM), or a flash memory.

The present embodiment and the drawings attached to the present specification merely clearly show a part of the technical spirit included in the above-described technology, and it will be apparent that all modified examples and specific embodiments easily inferred by those skilled in the art within the scope of the technical spirit included in the specification and drawings of the above-described technology are included in the scope of rights of the above-described technology.

## Claims

1. A process mining method, comprising:
determining, by a process mining apparatus, nodes and edges for each object type based on log data;
determining, by the process mining apparatus, backbones for the respective object types;
assigning, by the process mining apparatus, ranks to the nodes;
generating, by the process mining apparatus, process layouts for the respective object types; and
integrating, by the process mining apparatus, the process layouts for the respective object types to generate an overall process layout.

2. The process mining method of claim 1,
further comprising preparing, by the process mining apparatus, the log data,
wherein preparing the log data comprises at least one of: (i) extracting nodes and edges from the log data and; (ii) extracting traces and variants from the log data.

3. The process mining method of claim 1 or 2,
wherein determining the backbones comprises determining, as a backbone, nodes and edges included in a highest-frequency variant for each object type.

4. The process mining method of any one of claims 1 to 3,
wherein assigning the ranks to the nodes comprises assigning ranks to nodes for each object type such that a value of a first objective function is minimized,
wherein the first objective function is a function for minimizing violations of precedence relationships and lengths of edges.

5. The process mining method of any one of claims 1 to 4, wherein assigning the ranks to the nodes comprises assigning the ranks to the nodes such that at least one first constraint condition is satisfied,
wherein the at least one first constraint condition comprises at least one selected from the group consisting of: (i) a constraint condition in which an end node of the overall process layout is arranged below a start node; (ii) a constraint condition in which start nodes of object types are arranged above other nodes included in a same object type; and (iii) a constraint condition in which end nodes of object types are arranged below other nodes included in the same object type.

6. The process mining method of any one of claims 1 to 5, wherein generating the process layouts for the respective object types comprises generating a process layout for each object type by applying a backbone-based process layout generation method to each object type.

7. The process mining method of any one of claims 1 to 6,
wherein generating the overall process layout comprises selecting a main object type, selecting, as a target object type, an object type most similar to the main object type, deriving merge candidate groups for merging the selected target object type, generating candidate merged process layouts corresponding to the derived merge candidate groups, and generating the overall process layout by selecting an optimal merged layout from among the candidate merged process layouts.

8. The process mining method of claim 7,
wherein selecting, as the target object type, the object type most similar to the main object type, deriving merge candidate groups for merging the selected target object type, generating the candidate merged process layouts corresponding to the derived merge candidate groups, and generating the overall process layout by selecting the optimal merged layout from among the candidate merged process layouts are repeatedly performed until a predetermined condition is satisfied,
wherein the predetermined condition comprises a condition that there is no remaining object type to be merged.

9. The process mining method of claim 7 or 8,
wherein the main object type is an object type having the largest number of shared nodes with another object type.

10. The process mining method of any one of claims 7 to 9,
wherein the target object type is an object type having a shortest distance from the main object type,
wherein the distance is determined based on a number of nodes shared by the two process layouts such that the distance decreases as the number of shared nodes increases.

11. The process mining method of any one of claims 7 to 10,
wherein generating the overall process layout by selecting the optimal merged layout comprises:
calculating costs of generated candidate merged process layouts; and
selecting a candidate merged process layout having the lowest cost,
wherein the cost is calculated based on a second objective function including a first term and a second term,
wherein the first term reflects how much a rank of a distance between two object types in the generated candidate merged process layout differs from a rank of a distance between the two object types in an actual event log, and
wherein the second term reflects a number of edge overlaps in the generated candidate merged process layout.

12. The process mining method of any one of claims 1 to 11, further comprising assigning, by the process mining apparatus, different colors to nodes included in the generated overall process layout according to object types.

13. A process mining apparatus, comprising:
a computing device; and
a storage device storing instructions that, when executed by the computing device, cause the process mining apparatus to perform operations comprising:
determining nodes and edges for each object type based on log data;
determining backbones for the respective object types;
assigning ranks to the nodes;
generating process layouts for the respective object types; and
integrating the process layouts for the respective object types to generate an overall process layout.
